# EUROPEAN PATENT APPLICATION

(11) **EP 3 203 416 A1**
(43) Date of publication of application: **09.08.2017**
(21) Application number: 17154640.1
(22) Date of filing: 03.02.2017
(51) Int. Cl.: G06K 9/00

(54) **METHOD COMPUTER PROGRAM AND SYSTEM FOR FACIAL RECOGNITION**

(30) Priority: 05.02.2016 GB 201602129
(71) Applicant: IDscan Biometrics Limited, London E14 9QD (GB)
(72) Inventor: Saez-Trigueros, Daniel, London E14 9QD (GB); Hertlein, Heinz, Hatfield, Hertfordshire, AL10 9AB (GB); Ariyaeeinia, Aladdin, Hatfield, Hertfordshire, AL10 9AB (GB); Meng, Lily, Hatfield, Hertfordshire, AL10 9AB (GB); Alitto, Moneer, London, E14 9QD (GB); Hartnett, Margaret, London, E14 9QD (GB)
(74) Representative: Armstrong, Rosemary

(57) **Abstract**

The invention provides a facial recognition method, computer program and system which receive a first image containing a face and a second image containing a face, for each image, normalise the first and second images, select a set of K keypoints of the face of the first image, determine a texture feature at each keypoint comprising an N-coefficient keypoint texture vector, process each N-coefficient keypoint texture vector to produce an M-coefficient keypoint texture vector, where M is less than N and the M coefficients are determined according to their ability to represent the texture of the face around the keypoint, concatenate the M-coefficient keypoint texture vectors to produce a K by M-coefficient face texture vector of the face of the first image, and use the face texture vector of the face of the first image and the face texture vector of the face of the second image to calculate a match score and if the match score is greater than a first, upper, threshold determining that the face of the first image matches the face of the second image and if the match score is less than a second, lower, threshold determining that the face of the first image does not match the face of the second image.

## Description

### Field of the Invention

The invention relates to a method and system for facial recognition, particularly, but not exclusively, for facial recognition from images of identification documents.

### Background to the Invention

Facial recognition is used in a wide range of applications, which include access control, identification systems, surveillance, and identity verification. A particular application is the role of facial recognition in the authentication of identification documents (IDs), i.e. the process of analysing an ID in order to prove its legitimacy or otherwise. Millions of IDs are manually examined by human operators every day in different businesses and organisations. There is a growing need for automatic or semi-automatic methods for authenticating IDs. One method of automatic electronic validation of IDs uses facial recognition to compare a scanned image of the face printed on the ID with the image of the face stored in the ID's biometric chip. This validation check aims to reduce one common technique of forgery of IDs namely image substitution. Problems exist with this validation method, for example the presence of watermarks, holograms, reflections and other imperfections on the scanned image presents difficulties in analysis. The invention seeks to improve facial recognition methods, which can then be applied to the validation of IDs.

### Summary of the Invention

According to a first aspect of the invention there is provided a method of facial recognition comprising the steps of:
(i) receiving a first image containing a face and a second image containing a face,
(ii) normalising the first and second images,
(iii) selecting a set of K keypoints of the face of the first image,
(iv) determining a texture feature at each keypoint comprising an N-coefficient keypoint texture vector,
(v) processing each N-coefficient keypoint texture vector to produce an M-coefficient keypoint texture vector, where M is less than N and the M coefficients are determined according to their ability to represent the texture of the face around the keypoint,
(vi) concatenating the M-coefficient keypoint texture vectors to produce a K by M-coefficient face texture vector of the face of the first image,
(vii) repeating steps (iii) to (vi) for the face of the second image, and
(viii) using the face texture vector of the face of the first image and the face texture vector of the face of the second image to calculate a match score and if the match score is greater than a first, upper, threshold determining that the face of the first image matches the face of the second image and if the match score is less than a second, lower, threshold determining that the face of the first image does not match the face of the second image.

Normalising the first and second images may comprise detecting a position of the face of the image. Detecting a position of the face of the image may comprise using a Viola-Jones face detection method.

Normalising the first and second images may comprise detection of a plurality of landmarks of the face of the image. Detection of the landmarks of the face of the image may comprise using a constrained local neural field (CLNF) landmark detection method. Detection of the landmarks of the face of the image may comprise detecting 68 landmarks.

Normalising the first and second images may comprise using eye socket landmarks of the face of the image to locate positions of pupils of the face, using the pupil positions to place eyes of the face in a chosen location of the image and sizing and cropping the image.

Normalising the first and second images may comprise converting intensities of pixels of the images to greyscale intensities.

Selecting a set of K keypoints of the face of the first and second images may comprise choosing a grid of keypoints which substantially encompasses the face of the image. The grid may be symmetrical and comprise, for example any of 8x8 keypoints, 10x10 keypoints, 12x12 keypoints.

Determining an N-coefficient keypoint texture vector at each keypoint may comprise establishing an N-coefficient scale invariant feature transform (SIFT) descriptor at each keypoint.

Establishing an N-coefficient SIFT descriptor at each keypoint may comprise:
(i) choosing a X pixel by X pixel region centred around the keypoint,
(ii) for each pixel computing an intensity vector of the pixel,
(iii) dividing the X pixel by X pixel region around the keypoint into Z subregions,
(iv) for each subregion, creating an orientation histogram having a bin for each of Y orientations of intensity and populating the orientation histogram using the intensity gradients of the pixels of the subregion, and
(v) for all of the subregions, concatenating the magnitudes of corresponding bins of the orientation histograms to establish a SIFT descriptor having N = Z times Y coefficients.

For example, a 16 pixel by 16 pixel region may be chosen around the keypoint. The 16 pixel by 16 pixel region may be divided into 16 subregions, each having 4 pixels by 4 pixels, and 16 orientation histograms, each having 8 bins, representing 8 intensity orientations, created. The resulting SIFT descriptor would then have N = 16 times 8, i.e. 128, coefficients.

Establishing the N-coefficient SIFT descriptor at each keypoint may further comprise using a weighting function to weight the intensity vector of each pixel. The weighting function may be a Gaussian weighting function. A variance of the Gaussian weighting function may be selected according to the scale of the key point. Weighting the intensity vectors of the pixels in the region around the keypoint avoids abrupt changes in the SIFT descriptor of the keypoint and gives less emphasis to intensity gradients of pixels located far from the keypoint.

An N-coefficient SIFT descriptor, which represents an N-coefficient keypoint texture vector, is calculated as above for each of the keypoints.

The SIFT descriptors describe the texture of the face of the image around each keypoint, and, as the keypoints encompass the face, the SIFT descriptors together describe the texture across the face of the image. The SIFT descriptors extract texture feature, or intensity, information of the image that is more informative than the information from the raw pixels of the image.

Processing each N-coefficient keypoint texture vector to produce an M-coefficient keypoint texture vector may comprise processing each N-coefficient SIFT descriptor to produce an M-coefficient SIFT descriptor the M coefficients of the descriptor being determined according to their ability to represent the texture of the face around the keypoint. Processing each N-coefficient SIFT descriptor may comprise applying a principal component analysis (PCA) method followed by a linear discriminant analysis (LDA) method to determine the M coefficients of the descriptor according to their ability to represent the texture of the face around the keypoint. The PCA method and LDA method is applied to each SIFT descriptor individually.

The PCA and LDA methods may be trained to determine coefficients of the descriptor according to their ability to represent the texture of the face around the keypoint using a training database.

For example, 128-coefficient SIFT descriptors are reduced, on average, to 73 coefficients. The reduction in coefficients will depend on the training database used to train the PCA and LDA methods.

Concatenating the M-coefficient keypoint texture vectors may comprise concatenating the M-coefficient SIFT descriptors to produce a face texture vector of the face of the image.

The above steps are carried for each of the first and second images to produce a face texture vector of the face of the first image and a face texture vector of the face of the second image.

Using the face texture vector of the face of the first image and the face texture vector of the face of the second image to calculate a match score may comprise using a distance metric to measure the distance between the face texture vectors and a score normalisation to constrain the score to be between 0 and 1.

The first, upper, threshold may be used to control a true acceptance rate (TAR) and a false acceptance rate (FAR) of the facial recognition method. The second, lower, threshold may be used to control a true rejection rate (TRR) and a false rejection rate (FRR) of the facial recognition method. A match score between the upper and lower thresholds may yield an undetermined result. Using two thresholds provides a greater degree of control over the facial recognition rates of the method. The introduction of a second threshold represents a significant improvement in terms of the applicability of practical face recognition.

The method of facial recognition may further comprise using shape features of the faces of the images. Shape features are fused with texture features to boost the performance of the method, as the shape features are more robust to facial expressions.

The method of facial recognition may comprise the steps of:
(i) receiving a first image containing a face and a second image containing a face,
(ii) normalising the first and second images,
(iii) selecting a set of K keypoints of the face of the first image,
(iv) determining a texture feature at each keypoint comprising an N-coefficient keypoint texture vector,
(v) processing each N-coefficient keypoint texture vector to produce an M-coefficient keypoint texture vector, where M is less than N and the M coefficients are determined according to their ability to represent the texture of the face around the keypoint,
(vi) concatenating the M-coefficient keypoint texture vectors to produce a K by M-coefficient face texture vector of the face of the first image,
(vii) selecting a plurality of landmarks of the face of the first image,
(viii) using landmark locations to calculate a set of R shape features of the face,
(ix) processing the set of R shape features to produce a set of T shape features, where T is less than R and the T shape features are determined according to their ability to represent the shape of the face,
(x) normalising the K by M-coefficient face texture vector and the set of T shape features,
(xi) concatenating the K by M-coefficient face texture vector and the set of T shape features to produce a multi-coefficient texture/shape vector of the face of the first image,
(xii) processing the multi-coefficient texture/shape vector to produce a reduced-coefficient texture/shape vector, for which coefficients are determined according to their ability to represent the texture and shape of the face,
(xiii) repeating steps (iii) to (xii) for the face of the second image,
(xiv) using the reduced-coefficient texture/shape vector of the face of the first image and the reduced-coefficient texture/shape vector of the face of the second image to calculate a match score and if the match score is greater than a first, upper, threshold determining that the face of the first image matches the face of the second image and if the match score is less than a second, lower, threshold determining that the face of the first image does not match the face of the second image.

The selected plurality of landmarks may comprise the plurality of landmarks used in the normalisation of the images in step (ii). Using landmark locations to calculate the set of R shape features of the face may comprise calculating relative distances between pairs of landmark locations. In one embodiment, 68 landmark locations are used to calculate 2278 landmark distances i.e. a set of 2278 shape features.

Processing the set of R shape features to produce a set of T shape features may comprise applying a PCA method followed by a LDA method to determine the T shape features according to their ability to represent the shape of the face. The PCA and LDA methods may be trained to determine the T shape features according to their ability to represent the shape of the face using a training database. In one embodiment a PCA method followed by a LDA method is applied that reduces a set of 2278 shape features to a set of 40 shape features. The reduction in coefficients will depend on the training database used to train the PCA and LDA methods.

Normalising the K by M-coefficient face texture vector and the set of T shape features may comprise using a unit L₂ -norm method. This puts the texture features and the shape features in same range.

Processing the multi-coefficient texture/shape vector to produce a reduced-coefficient texture/shape vector may comprise applying a PCA method followed by a LDA method to determine coefficients according to their ability to represent the texture and shape of the face. The PCA and LDA methods may be trained to determine coefficients according to their ability to represent the texture and shape of the face using a training database.

The method may be applied to a first image and one second image for verification of the face of the first image. The method may be applied to a first image and a plurality of second images for identification of the face of the first image. The method may be applied to a first image comprising a scan of a photograph of an ID and a second image comprising an image stored in the ID. The face recognition method can be used to match a face scanned from an ID against the face stored in a biometric chip of the ID.

The purpose of this is to aid the automatic detection of forged IDs.

According to a second aspect of the invention there is provided a facial recognition computer program, tangibly embodied on a computer readable medium, the computer program including instructions for causing a computer to execute the method of facial recognition according to the first aspect of the invention.

According to a third aspect of the invention there is provided a facial recognition system comprising:
(i) an image receiver which receives a first image containing a face and a second image containing a face,
(ii) a processor which for each of the first and second images,
normalises the image,
selects a set of K keypoints of the face of the image,
determines a texture feature at each keypoint comprising an N-coefficient keypoint texture vector,
processes each N-coefficient keypoint texture vector to produce an M-coefficient keypoint texture vector, where M is less than N and the M coefficients are determined according to their ability to represent the texture of the face around the keypoint, concatenates the M-coefficient keypoint texture vectors to produce a K by M-coefficient face texture vector of the face of the image,
uses the face texture vector of the face of the first image and the face texture vector of the face of the second image to calculate a match score and if the match score is greater than a first, upper, threshold determines that the face of the first image matches the face of the second image and if the match score is less than a second, lower, threshold determines that the face of the first image does not match the face of the second image, and outputs the determination.

### Description of the Invention

Embodiments of the present invention are herein described, by way of example of only, with reference to the accompanying drawings, in which:
Figure 1 is a schematic representation of a facial recognition method in accordance with the first aspect of the invention, and
Figure 2 is a schematic representation of a facial recognition system in accordance with the third aspect of the invention.

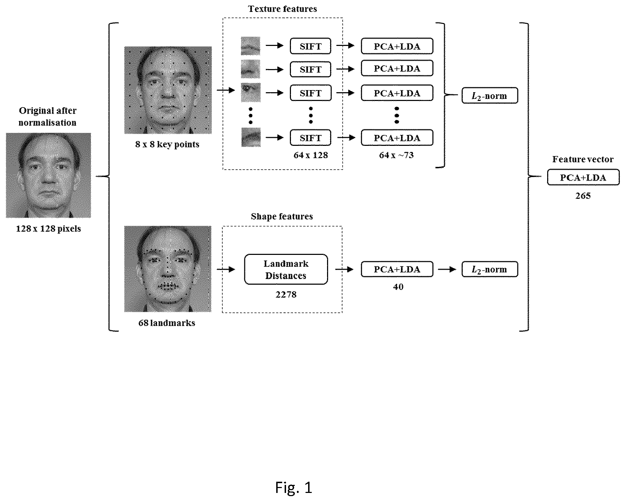

Referring to Figure 1, the method of facial recognition comprising the steps of:
(i) receiving a first image containing a face and a second image containing a face,
(ii) normalising the first and second images,
(iii) selecting a set of K keypoints of the face of the first image,
(iv) determining a texture feature at each keypoint comprising an N-coefficient keypoint texture vector,
(v) processing each N-coefficient keypoint texture vector to produce an M-coefficient keypoint texture vector, where M is less than N and the M coefficients are determined according to their ability to represent the texture of the face around the keypoint,
(vi) concatenating the M-coefficient keypoint texture vectors to produce a K by M-coefficient face texture vector of the face of the first image,
(vii) selecting a plurality of landmarks of the face of the first image,
(viii) using landmark locations to calculate a set of R shape features of the face,
(ix) processing the set of R shape features to produce a set of T shape features, where T is less than R and the T shape features are determined according to their ability to represent the shape of the face,
(x) normalising the K by M-coefficient face texture vector and the set of T shape features,
(xi) concatenating the K by M-coefficient face texture vector and the set of T shape features to produce a multi-coefficient texture/shape vector of the face of the first image,
(xii) processing the multi-coefficient texture/shape vector to produce a reduced-coefficient texture/shape vector, for which coefficients are determined according to their ability to represent the texture and shape of the face,
(xiii) repeating steps (iii) to (xii) for the face of the second image,
(xiv) using the reduced-coefficient texture/shape vector of the face of the first image and the reduced-coefficient texture/shape vector of the face of the second image to calculate a match score and if the match score is greater than a first, upper, threshold determining that the face of the first image matches the face of the second image and if the match score is less than a second, lower, threshold determining that the face of the first image does not match the face of the second image.

Normalising the first and second images first comprises detecting a position of the face of the image using a Viola-Jones face detection method and then detecting of 68 landmarks of the face of the image using a constrained local neural field (CLNF) landmark detection method. Eye socket landmarks are used to locate positions of pupils of the face. The pupil positions are then used to place eyes of the face in a chosen location of the image, to size the image and to crop an area of the image. Finally, normalising the first and second images comprises converting intensities of pixels of the images to greyscale intensities.

The plurality of K keypoints of the face of the first and second images are selected by choosing a grid of keypoints which substantially encompasses the face of the image. The grid is symmetrical and comprises, in this embodiment, 8x8 keypoints.

At each keypoint, an N-coefficient keypoint texture vector is determined by establishing an N-coefficient SIFT descriptor at the keypoint.

Establishing an N-coefficient SIFT descriptor at each keypoint comprises:
(i) choosing a X pixel by X pixel region centred around the keypoint,
(ii) for each pixel computing an intensity vector of the pixel,
(iii) using a Gaussian weighting function to weight the intensity vector of each pixel,
(iii) dividing the X pixel by X pixel region around the keypoint into Z subregions,
(iv) for each subregion, creating an orientation histogram having a bin for each of Y orientations of intensity and populating the orientation histogram using the intensity gradients of the pixels of the subregion, and
(v) for all of the subregions, concatenating the magnitudes of corresponding bins of the orientation histograms to establish a SIFT descriptor having N = Z times Y coefficients.

In this embodiment, a 16 pixel by 16 pixel region is chosen around the keypoint. The 16 pixel by 16 pixel region is divided into 16 subregions, each having 4 pixels by 4 pixels, and 16 orientation histograms, each having 8 bins representing 8 intensity orientations, created. The resulting SIFT descriptor has N = 16 times 8, i.e. 128, coefficients.

Each N-coefficient SIFT descriptor is then processed to produce an M-coefficient SIFT descriptor, the M coefficients of the descriptor being determined according to their ability to represent the texture of the face around the keypoint. Processing each N-coefficient SIFT descriptor comprises applying a PCA method followed by a LDA method to determine the M coefficients of the descriptor according to their ability to represent the texture of the face around the keypoint. The PCA method and LDA method is applied to each SIFT descriptor individually. The PCA and LDA methods are trained to determine coefficients of the descriptor according to their ability to represent the texture of the face around the keypoint using a training database. In this embodiment, 128-coefficient SIFT descriptors are reduced, on average, to 73 coefficients.

The M-coefficient SIFT descriptors are then concatenated to produce a face texture vector of the face of the first image.

Using the landmark locations to calculate the set of R shape features of the face comprises calculating relative distances between pairs of landmark locations. In this embodiment, 68 landmark locations are used to calculate 2278 landmark distances i.e. a set of 2278 shape features.

The set of R shape features are then processed to produce a set of T shape features by applying a PCA method followed by a LDA method to determine the T shape features according to their ability to represent the shape of the face. The PCA and LDA methods are trained to determine the T shape features according to their ability to represent the shape of the face using a training database. In this embodiment, a PCA method followed by a LDA method is applied that reduces the set of 2278 shape features to a set of 40 shape features.

The K by M-coefficient face texture vector and the set of T shape features are normalised using a unit L₂ -norm method and concatenated to produce a multi-coefficient texture/shape vector of the face of the first image. This is processed to produce a reduced-coefficient texture/shape vector, by applying a PCA method followed by a LDA method to determine coefficients according to their ability to represent the texture and shape of the face. The PCA and LDA methods are trained to determine the coefficients according to their ability to represent the texture and shape of the face using a training database.

The above steps are carried out for each of the first and second images to produce a face texture vector of the face of the first image and a face texture vector of the face of the second image and the reduced-coefficient texture/shape vector of the face of the first image and the reduced-coefficient texture/shape vector of the face of the second image are used to calculate a match score. If the match score is greater than a first, upper, threshold, the face of the first image matches the face of the second image and if the match score is less than a second, lower, threshold, the face of the first image does not match the face of the second image.

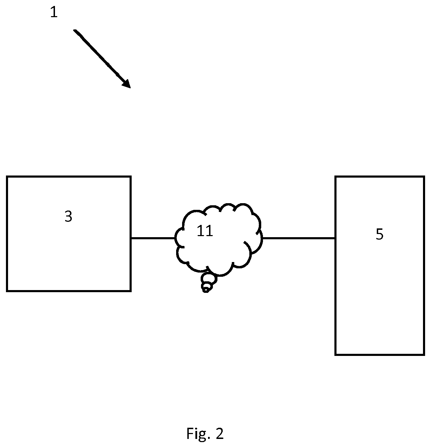

Referring to Figure 2, a facial recognition system 1 is described. This comprises an image receiver 3 and a processor 5.

The image receiver 3 can comprise any of an image scanner, an image capture device, such as a camera, a chip reader, such as a radio frequency identification (RFID) reader. The image receiver 3 may comprise a camera and an RFID reader in a mobile phone. The image receiver 3 is provided at a location of, or accessible to, a user of the image recognition system 1.

In one embodiment of the invention, the image receiver 3 comprises an image scanner which scans a first image comprising a photograph of an ID and a chip reader which reads a second image comprising an image stored in a chip of the ID.

The processor 5 can comprise a processor in a computer. The processor 5 is provided at a location of a provider of the image recognition system 1. The locations may be remote from each other and may be wirelessly connected via the Internet 11.

The image receiver 3 receives a first image containing a face and a second image containing a face and passes these to the processor 5. For each of the first and second images, the processor 5 normalises the image, selects a set of K keypoints of the face of the image, determines a texture feature at each keypoint comprising an N-coefficient keypoint texture vector, processes each N-coefficient keypoint texture vector to produce an M-coefficient keypoint texture vector, where M is less than N and the M coefficients are determined according to their ability to represent the texture of the face around the keypoint, concatenates the M-coefficient keypoint texture vectors to produce a K by M-coefficient face texture vector of the face of the image, selects a plurality of landmarks of the face of the first image, uses landmark locations to calculate a set of R shape features of the face, processes the set of R shape features to produce a set of T shape features, where T is less than R and the T shape features are determined according to their ability to represent the shape of the face, normalises the K by M-coefficient face texture vector and the set of T shape features, concatenates the K by M-coefficient face texture vector and the set of T shape features to produce a multi-coefficient texture/shape vector of the face of the image, processes the multi-coefficient texture/shape vector to produce a reduced-coefficient texture/shape vector, for which coefficients are determined according to their ability to represent the texture and shape of the face, and uses the reduced-coefficient texture/shape vector of the face of the first image and the reduced-coefficient texture/shape vector of the face of the second image to calculate a match score and if the match score is greater than a first, upper, threshold determining that the face of the first image matches the face of the second image and if the match score is less than a second, lower, threshold determining that the face of the first image does not match the face of the second image.

## Claims

1. A method of facial recognition comprising the steps of:
(i) receiving a first image containing a face and a second image containing a face,
(ii) normalising the first and second images,
(iii) selecting a set of K keypoints of the face of the first image,
(iv) determining a texture feature at each keypoint comprising an N-coefficient keypoint texture vector,
(v) processing each N-coefficient keypoint texture vector to produce an M-coefficient keypoint texture vector, where M is less than N and the M coefficients are determined according to their ability to represent the texture of the face around the keypoint,
(vi) concatenating the M-coefficient keypoint texture vectors to produce a K by M-coefficient face texture vector of the face of the first image,
(vii) repeating steps (iii) to (vi) for the face of the second image, and
(viii) using the face texture vector of the face of the first image and the face texture vector of the face of the second image to calculate a match score and if the match score is greater than a first, upper, threshold determining that the face of the first image matches the face of the second image and if the match score is less than a second, lower, threshold determining that the face of the first image does not match the face of the second image.

2. A method according to claim 1 in which normalising the first and second images comprises detecting a position of the face of the image.

3. A method according to any preceding claim in which normalising the first and second images comprises detection of a plurality of landmarks of the face of the image.

4. A method according to any preceding claim in which normalising the first and second images comprises using eye socket landmarks of the face of the image to locate positions of pupils of the face, using the pupil positions to place eyes of the face in a chosen location of the image and sizing and cropping the image.

5. A method according to any preceding claim in which selecting a set of K keypoints of the face of the first and second images comprises choosing a grid of keypoints which substantially encompasses the face of the image.

6. A method according to any preceding claim in which determining an N-coefficient keypoint texture vector at each keypoint comprises establishing an N-coefficient scale invariant feature transform (SIFT) descriptor at each keypoint.

7. A method according to claim 6 in which establishing an N-coefficient SIFT descriptor at each keypoint comprises:
(i) choosing a X pixel by X pixel region centred around the keypoint,
(ii) for each pixel computing an intensity vector of the pixel,
(iii) dividing the X pixel by X pixel region around the keypoint into Z subregions,
(iv) for each subregion, creating an orientation histogram having a bin for each of Y orientations of intensity and populating the orientation histogram using the intensity gradients of the pixels of the subregion, and
(v) for all of the subregions, concatenating the magnitudes of corresponding bins of the orientation histograms to establish a SIFT descriptor having N = Z times Y coefficients.

8. A method according to claim 6 or claim 7 in which processing each N-coefficient keypoint texture vector to produce an M-coefficient keypoint texture vector comprises processing each N-coefficient SIFT descriptor to produce an M-coefficient SIFT descriptor by applying a principal component analysis (PCA) method followed by a linear discriminant analysis (LDA) method to determine the M coefficients of the descriptor according to their ability to represent the texture of the face around the keypoint.

9. A method according to claim 8 in which concatenating the M-coefficient keypoint texture vectors comprises concatenating the M-coefficient SIFT descriptors to produce a face texture vector of the face of the image.

10. A method according to any preceding claim in which using the face texture vector of the face of the first image and the face texture vector of the face of the second image to calculate a match score comprises using a distance metric to measure the distance between the face texture vectors and a score normalisation to constrain the score to be between 0 and 1.

11. A method according to any preceding claim which comprises the steps of:
(i) receiving a first image containing a face and a second image containing a face,
(ii) normalising the first and second images,
(iii) selecting a set of K keypoints of the face of the first image,
(iv) determining a texture feature at each keypoint comprising an N-coefficient keypoint texture vector,
(v) processing each N-coefficient keypoint texture vector to produce an M-coefficient keypoint texture vector, where M is less than N and the M coefficients are determined according to their ability to represent the texture of the face around the keypoint,
(vi) concatenating the M-coefficient keypoint texture vectors to produce a K by M-coefficient face texture vector of the face of the first image,
(vii) selecting a plurality of landmarks of the face of the first image,
(viii) using landmark locations to calculate a set of R shape features of the face,
(ix) processing the set of R shape features to produce a set of T shape features, where T is less than R and the T shape features are determined according to their ability to represent the shape of the face,
(x) normalising the K by M-coefficient face texture vector and the set of T shape features,
(xi) concatenating the K by M-coefficient face texture vector and the set of T shape features to produce a multi-coefficient texture/shape vector of the face of the first image,
(xii) processing the multi-coefficient texture/shape vector to produce a reduced-coefficient texture/shape vector, for which coefficients are determined according to their ability to represent the texture and shape of the face,
(xiii) repeating steps (iii) to (xii) for the face of the second image,
(xiv) using the reduced-coefficient texture/shape vector of the face of the first image and the reduced-coefficient texture/shape vector of the face of the second image to calculate a match score and if the match score is greater than a first, upper, threshold determining that the face of the first image matches the face of the second image and if the match score is less than a second, lower, threshold determining that the face of the first image does not match the face of the second image.

12. A method according to claim 11 in which processing the set of R shape features to produce a set of T shape features comprises applying a PCA method followed by a LDA method to determine the T shape features according to their ability to represent the shape of the face.

13. A method according to claim 11 or claim 12 in which processing the multi-coefficient texture/shape vector to produce a reduced-coefficient texture/shape vector comprises applying a PCA method followed by a LDA method to determine coefficients according to their ability to represent the texture and shape of the face.

14. A facial recognition computer program, tangibly embodied on a computer readable medium, the computer program including instructions for causing a computer to execute the method of facial recognition according to the first aspect of the invention.

15. A facial recognition system (1) comprising:
(i) an image receiver (3) which receives a first image containing a face and a second image containing a face,
(ii) a processor (5) which for each of the first and second images,
normalises the image,
selects a set of K keypoints of the face of the image,
determines a texture feature at each keypoint comprising an N-coefficient keypoint texture vector,
processes each N-coefficient keypoint texture vector to produce an M-coefficient keypoint texture vector, where M is less than N and the M coefficients are determined according to their ability to represent the texture of the face around the keypoint, concatenates the M-coefficient keypoint texture vectors to produce a K by M-coefficient face texture vector of the face of the image,
uses the face texture vector of the face of the first image and the face texture vector of the face of the second image to calculate a match score and if the match score is greater than a first, upper, threshold determines that the face of the first image matches the face of the second image and if the match score is less than a second, lower, threshold determines that the face of the first image does not match the face of the second image, and outputs the determination.
